Europäisches Patentamt

European Patent Office

Office européen des brevets

(19)

(11) Publication number: **0 127 432**
A2

# (12) EUROPEAN PATENT APPLICATION

(21) Application number: **84303482.8**

(22) Date of filing: **23.05.84**

(51) Int. Cl.³: **F 16 L 59/00**
**C 09 K 3/28**

(30) Priority: **24.05.83 US 497623**

(43) Date of publication of application:
**05.12.84 Bulletin 84/49**

(84) Designated Contracting States:
**AT BE CH DE FR IT LI NL SE**

(71) Applicant: **RAYCHEM CORPORATION**
**300 Constitution Drive**
**Menlo Park California 94025(US)**

(72) Inventor: **Sharp, Donald William**
**1300 Walker Drive**
**Downington Pennsylvania(US)**

(74) Representative: **Jay, Anthony William et al,**
**Raychem Limited Intellectual Property Law Department**
**Faraday Road**
**Dorcan Swindon Wiltshire(GB)**

(54) Article for protecting substrates.

(57) A substrate is protected from excessive heat by covering it with a protective article comprising a glass fiber element which has been coated with a silicone rubber composition containing about 0.01 to about 10% by weight, based on the weight of the rubber, of a boron compound. The article protects the underlying substrate for a period of time if exposed to temperatures of up to about 2000°F and indefinitely if exposed to temperatures of up to about 500°F. The temperature differential between the inner and outer surfaces of the protective article can be as high as 800°F thereby protecting the underlying substrate from damage caused by excessive heat.

Fig.1.

This invention relates to glass fiber substrates having on the surface thereof a silicone-rubber based coating.

Substrates such as electrical cables and fuel, hydraulic and gas lines need to be protected from exposure to excessive heat not only from sustained high temperatures, but also from short term flame bursts and molten splashes which can cause severe damage to the substrate. It is known to use a glass fiber element such as a sleeve, jacket or tape to protect such substrates from heat. Thermal protection is enhanced if the glass fiber element is coated with a silicone rubber composition. However, for some applications, it has been found that the degree of protection afforded the underlying substrate by conventional silicone-coated glass fiber element is inadequate. In particular, it has been determined that for use in protecting, for example, hydraulic lines, a thermal barrier which maintains the underlying substrate about 700°F below the temperature of an open flame, e.g. about 2000°F, for about ten minutes is desirable. Typical silicone-coated glass fiber elements currently used are not capable of providing such protection. This invention provides an improved silicone-coated glass fiber article which is capable of providing a substrate with such protection from excessive heat.

One aspect of this invention provides an article comprising a glass fiber element having adhered thereto a coating comprising a cured silicone rubber composition containing a boron-containing compound in an amount of from about 0.01 to about 10% by weight, based on the weight of the silicone rubber.

Another aspect of this invention provides a method of preparing an article suitable for use in protecting a substrate from heat which comprises coating a glass fiber element with a composition comprising a curable liquid silicone rubber composition containing a boron containing compound in an amount of about 0.01 to about 10% by weight, based on the weight of the silicone rubber, and then curing the composition.

Yet another aspect of this invention provides a method of protecting a substrate from heat which comprises applying over the surface of said substrate an article comprising a glass fiber element coated with a composition comprising a cured silicone rubber composition containing a boron-containing compound in an amount of from about 0.01 to about 10% by weight, based on the weight of the silicone rubber.

Figure 1 illustrates an article of this invention comprising a glass fiber braid coated with the silicone rubber composition.

Figure 2 illustrates the use of an article of this invention used to provide thermal and splash protection to a tubular substrate.

The glass fiber element can be made from glass fibers or glass monofilaments. Preferably, the element is a fabric and can be prepared by any technique, for example, it can be a braided, knitted, woven or non-woven fabric. The element can also be an assemblage of individual fibers such as a wound coil, or the like, if desired. The form and shape of the element depends to a certain extent on the substrate ultimately to be protected. The element can be, for example, a tape, sleeve, tubular article or the like. Where the substrate to be protected is a cable, hose or conduit, the preferred element is in tubular form, and is preferably a braided sleeve or jacket.

The composition coated onto the element comprises a liquid silicone rubber. Such rubbers are well known and are commercially available. The liquid rubber generally comprises a low molecular weight oranopoly-siloxane such as dimethylpolysiloxane, vinyl-endblocked dimethylpolysiloxane, or the like. A curing catalyst is typically supplied as a separate component and is added to the liquid rubber composition just prior to use. A typical curing catalyst used in such a system is a platinum catalyst. Some liquid silicone rubber compositions are supplied as single component systems. These contain curing catalysts which are activated by heat, oxygen or the like. Until the catalyst is activated, curing of the silicone rubber does not occur. Further details of liquid silicone rubber compositions which can be employed in the practice of this invention can be found in U.S. Patents Nos.

0127432

3,445,420 to Johnson and 4,108,825 to Hayes.

The liquid silicone rubber composition used in accordance with this invention contains a boron-containing compound. The boron compound is present in an amount of about 0.01 to about 10% by weight, based on the weight of the silicone rubber. Preferred compositions contain from about 1 to about 10% by weight of the boron compound and particularly preferred are compositions contain from about 3 to about 7% by weight of the boron compound, based on the weight of the silicone rubber.

The boron compound used is preferably boric acid, an alkali metal borate, for example, sodium tetraborate decahydrate (borax), alkaline earth metal borate such as barium borate, or other metal borate such as zinc borate. Zinc borate is particularly preferred.

The glass fiber element can be coated with the liquid silicone rubber composition by known techniques. Typically, the coating is applied by extruding the liquid silicone rubber composition onto the glass fiber element. The element is generally coated on one side only. For example, if the substrate is tubular, the silicone rubber composition is generally applied to the outer surface which is the surface likely to come into contact with a flame or molten splash. The article can be coated on both sides, if desired, to provide additional protection to the underlying substrate.

The coating is applied in an amount to provide a coating from about 20 to about 75 mils thick, preferably from about 30 to about 60 mils.

After the glass fiber element is coated with the liquid silicone rubber the composition is cured. Generally the composition is heated from about 350°F to about 450°F, and preferably about 400°F to effect cure of the silicone rubber. Certain silicone rubber compositions are curable at room temperature and if such a composition is used to coat the glass fiber element in accordance with this invention heat is not required to effect cure.

The use of borates and in particular borax as flame retardant additivies for resins is known. See for example U.S. Patent No. 3,868,346 to Merrill. Typically the amount of borate is much greater than the amount used in accordance with the present invention. The compositions employed in this invention contain no more than about 10% by weight of a metal borate, based on the weight of the silicone rubber. It has been found that use of greater amounts of borate has no further effect on the thermal protection properties of the silicone-coated glass fiber element.

The protective article of this invention is used to protect substrates such as cables, hydraulic lines and the like. The article protects the substrate for a period of time when exposed to temperatures of up to about 2000°F. This enables the substrate to continue to function, for example conduct electricity or hydraulic fluid, during a fire. This enables equipment, in particular safety equipment to continue in operation for a period of time. The protective article of this invention meets typical requirements in providing protection at temperatures of up to about 2000°F for about 15 minutes. This requirement is generally tested by determining the temperature differential between the two surfaces of the article when one of them, typically the silicone-coated surface, is subjected to an open flame. The temperature differential between the two surfaces is preferably at least about 800°F after 5 minutes exposure to an open flame and 700°F after about 15 minutes.

In using the protective article of this invention, it is applied over the substrate generally with the silicone-coated surface being the external surface. For elongate substrates such as cables, the article can be a tubular article such as a sleeve or jacket slid over the substrate. If an end of the substrate is not conveniently reached, the article in the form of a tape can be applied by spirally wrapping the tape around the substrate.

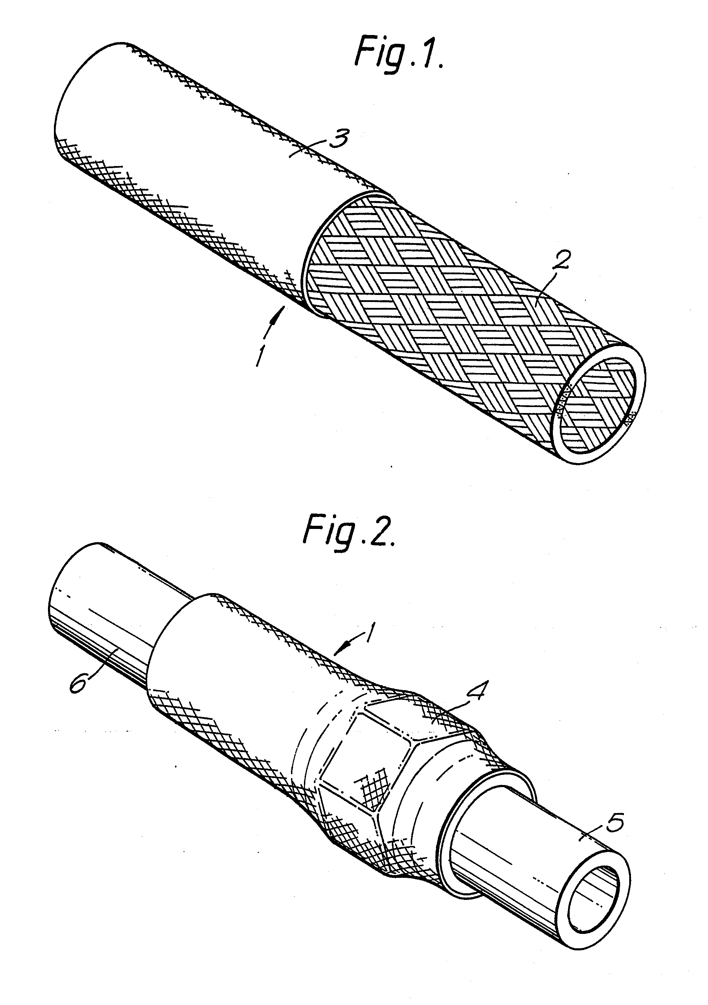

An article in accordance with this invention is illustrated in Figure 1 and its use to protect a substrate in Figure 2. In Figure 1 a braided glass fiber sleeve, 2, has a coating, 3, adhered thereto over a portion of its length. The coating 2 comprises a silicone rubber containing 5% by weight zinc borate, based on the weight of the silicone rubber. Generally, an article in accordance with this invention has a coating over the entire outer surfaces, but for purposes of illustrating the braided glass fiber sleeve, the article of Figure 1 is shown with the coating along only a portion of its length

Figure 2 illustrates use of the article of Figure 1 with the coating extending along the entire outer surface. In Figure 2, the article, 1, is positioned over a connection, 4, between joined hydraulic lines, 5 and 6. As will be readily apparent, the protective article can be used to protect a portion of a cable or conduit as illustrated or can extend over its entire length.

The following examples illustrate preparation of a protective article in accordance with this invention. Each article was tested to determine the temperature differential between the external (silicone-coated) and internal surfaces of the article when the external surface was subjected to an open flame.

Examples 1-10

Compositions were prepared by blending the components together on an inline static mixer. The liquid silicone rubber compositions were provided as two-part systems which were used in a 1:1 ratio in accordance with the manufacturer's instructions. The boron compound and pigment were then added. The pigment, red iron oxide was added in the form of a paste of 35% pigment in dimethylpolysilicone fluid. Where indicated in the following Table, zinc borate was added as a paste in dimethylpolysilicone carrier fluid having a borate to carrier fluid ratio of 1 to 1.5. Examples 9 and 10 represent control examples in which no boron-containing compound was added.

In preparing the compositions two commercially available liquid silicone rubber systems were used:

Silicone Rubber A was liquid silicone rubber £GP-590 available from the Dow Chemical Company and believed to be a dimethylpolysiloxane,

Silicone Rubber B was liquid silicone rubber £SLE 5600 available from General Electric Company also believed to be a dimethylpolysiloxane.

Table 1 gives the components used to prepare seven compositions comprising liquid silicone rubber and metal borate.

Each composition was evaluated for use in preparing an article of this invention by pressure coating a glass fiber braid with the composition, then curing the composition at 400°F. In each case the coating was applied to the outer surface of the braid. The coated surface was subjected to an open flame at a temperature of about 1850-1875°F. The temperature of the inner surface of the braid was measured at intervals of 5, 10 and 13.5 minutes after application of the flame and the temperature differential between the flame temperature and the temperature of the inner surface was derived from these measurements. The results are listed in Table 1.

0127432

### Table 1

| Component | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| Silicone Rubber A | 100 | 100 | 100 | | 100 | 100 | 100 | | 100 | |
| Silicone Rubber B | | | | | | | | 100 | | 100 |
| Zinc Borate | 3 | 5 | 8 | | 3 | 10 | 5 | 5 | | |
| Alumina Trihydrate | | | | 3 | | 10 | | | | |
| Boric Acid | | | | 1 | 1 | | | | | |
| Red Iron Oxide Paste | 2 | 2 | 2 | 2 | 2 | 2 | 2 | 2 | 2 | 2 |
| Dimethylpolysilicone Fluid | | | | | | | 5.5 | 5.5 | | |
| Temperature Differential | | | | | | | | | | |
| 5 Minutes | 820°F | 999°F | 755°F | 739°F | 937°F | 925°F | 877°F | 1090°F | 691°F | 740°F |
| 10 Minutes | 580°F | 804°F | 662°F | 556°F | 831°F | 692°F | 801°F | 876°F | 555°F | 694°F |
| 13.5 Minutes | 510°F | 732°F | 632°F | 501°F | 781°F | 633°F | 759°F | 809°F | 502°F | 681°F |

## CLAIMS:

1.    An article comprising a glass fiber element having adhered thereto a coating comprising a cured silicone rubber composition containing a boron-containing compound in an amount of from about 0.01 to about 10% by weight, based on the weight of the silicone rubber.

2.    An article in accordance with Claim 1 wherein the glass fiber element is a braided, knitted, woven or non-woven fabric.

3.    An article in accordance with Claim 2 wherein the glass fiber element is in tubular form.

4.    An article in accordance with Claim 2 wherein said glass fiber structure is in tape form.

5.    An article in accordance with Claim 1 wherein the boron-containing compound is zinc borate.

6.    An article in accordance with Claim 5 wherein the zinc borate is present in an amount of about 3 to about 7% by weight based on the weight of the silicone rubber.

7.    An article in accordance with Claim 1 wherein the silicone rubber is derived from dimethylpolysiloxane.

8.    An article in accordance with Claim 1 wherein the coating is on one surface of the substrate.

0127432
MPO870

9.    An article in accordance with Claim 7 wherein the coating is from about 20 to about 75 mils thick.

10.    A method of preparing an article suitable for use in protecting a substrate from heat which comprises coating a glass fiber element with a composition comprising a curable liquid silicone rubber composition containing a boron-containing compound in an amount of about 0.01 to about 10% by weight, based on the weight of the silicone rubber; and then curing the composition.

11.    A Method in accordance with Claim 10 wherein the glass fiber element is a braided, knitted, woven or non-woven fabric.

12.    A method in accordance with Claim 11 wherein the glass fiber element is in tubular form.

13.    A method in accordance with Claim 11 wherein the glass fiber element is in tape form.

14.    A method in accordance with Claim 10 wherein the boron-containing compound is zinc borate.

15.    A method in accordance with Claim 14 wherein the zinc borate is present in an amount of about 3 to about 7% by weight based on the weight of the silicone rubber.

16.    A method in accordance with Claim 10 wherein the silicone rubber is derived from dimethylpoly-siloxane.

0127432

17.     A method in accordance with Claim 10 wherein the coating is on one surface of the substrate.

18.     A method in accordance with Claim 17 wherein the coating is from about 20 to about 75 mils thick.

19.     A method of protecting a substrate from heat which comprises applying over the surface of said substrate, an article comprising a glass fiber element coated with a composition comprising a cured silicone rubber composition containing a boron-containing compound in an amount of from about 0.01 to about 10% by weight, based on the weight of the silicone rubber.

20.     The method in accordance with Claim 19 wherein the article is coated on one surface thereof with the composition.

21.     The method in accordance with Claim 20 wherein the article is a tape and is applied by spirally wrapping the tape around the substrate such that the coated surface is the external surface.

22.     The method in accordance with Claim 20 wherein the article is in tubular form coated on the outer surface thereof and is applied by sliding it over the substrate.

0127432

## Fig.1.

3

2

1

## Fig.2.

6

1

4

5